# EUROPEAN PATENT SPECIFICATION

(11) **EP 4 376 121 B1**
(45) Date of publication and mention of the grant of the patent: **19.08.2026**
(21) Application number: 23753017.5
(22) Date of filing: 18.01.2023
(51) Int. Cl.: H01M 4/04, H01M 4/131, H01M 4/134, H01M 4/36, H01M 4/62, H01M 4/48, H01M 4/38, H01M 10/0525

(54) **ANODE FOR LITHIUM SECONDARY BATTERY, AND LITHIUM SECONDARY BATTERY COMPRISING ANODE**
ANODE FÜR LITHIUMSEKUNDÄRBATTERIE UND LITHIUMSEKUNDÄRBATTERIE MIT DER ANODE
ANODE POUR BATTERIE SECONDAIRE AU LITHIUM, ET BATTERIE SECONDAIRE AU LITHIUM L'ANODE

(30) Priority: 11.02.2022 KR 20220018119
(43) Date of publication of application: 29.05.2024
(73) Proprietor: LG Energy Solution, Ltd., Seoul 07335 (KR)
(72) Inventor: KIM, Young Jae, Daejeon 34122 (KR); KWON, Yohan, Daejeon 34122 (KR)
(74) Representative: Hoffmann Eitle
(86) International application number: PCT/KR2023/000889
(87) International publication number: WO 2023/153666

(56) References cited:
- EP-A1- 3 836 280
- EP-A1- 4 411 893
- JP-A- 2017 037 748
- JP-A- 2021 044 225
- KR-A- 20170 034 724
- KR-A- 20180 008 322
- KR-A- 20210 127 011
- US-A1- 2009 092 859
- US-A1- 2015 295 270

## Description

### [Technical Field]

The present application relates to a negative electrode for a lithium secondary battery, and a lithium secondary battery including a negative electrode.

### [Background Art]

Due to the rapid increase in the use of fossil fuels, the demand for the use of alternative energy or clean energy is increasing, and as part thereof, the fields that are being studied most actively are the fields of power generation and power storage using an electrochemical reaction.

At present, a secondary battery is a representative example of an electrochemical device that utilizes such electrochemical energy, and the range of use thereof tends to be gradually expanding.

Along with the technology development and the increase in demand for mobile devices, the demand for secondary batteries as an energy source is sharply increasing. Among such secondary batteries, lithium secondary batteries having high energy density and voltage, long cycle life, and low self-discharging rate have been commercialized and widely used. In addition, research is being actively conducted on a method for manufacturing a high-density electrode having a higher energy density per unit volume as an electrode for such a high-capacity lithium secondary battery.

In general, a secondary battery includes a positive electrode, a negative electrode, an electrolyte, and a separator. The negative electrode includes a negative electrode active material for intercalating and deintercalating lithium ions to and from the positive electrode, and silicon-based particles having a high discharge capacity may be used as the negative electrode active material.

In particular, according to the demand for high density energy batteries in recent years, research is being actively conducted on a method for increasing a capacity by using together a silicon-based compound such as Si/C and SiOx having a capacity 10 times or higher than that of a graphite-based material, as a negative electrode active material. However, as compared to graphite that is typically used, a silicon-based compound that is a high capacity material has a large capacity but undergoes rapid volume expansion during charging, thereby disconnecting a conductive path to degrade battery characteristics.

Therefore, in order to solve the problem that occurs when a silicon-based compound is used as a negative electrode active material, a variety of methods are discussed, such as a method of controlling a driving potential, a method of additionally coating a thin film on an active material layer, a method of suppressing volume expansion itself such as a method of controlling a particle size of a silicon-based compound or a method for preventing disconnection of a conductive path.

In particular, recent research has revealed that large amounts of negative electrode conductive material and negative electrode binder should be used in order to prevent disconnection of a conductive path. In the case of the silicon-based negative electrode, a water-based polymer binder is used as the binder, unlike an existing graphite electrode. As a result, a phenomenon that the negative electrode is curled frequently occurs in a manufacturing process of the negative electrode, which causes problems in the process, such as breakage and scratches of the negative electrode.

The curling is a phenomenon that occurs after a negative electrode slurry is coated on a coated region of a negative electrode current collector layer and then all moisture in the slurry is dried during drying, and means a phenomenon that stress by which the water-based polymer binder is returned to an original structure due to temperatures after drying is generated, and therefore, an uncoated region of the negative electrode current collector layer is bent.

In order to solve the above problem, a content of the water-based polymer binder simply needs to be reduced. However, in this case, the volume expansion and contraction of the silicon-based active material itself cannot be controlled, and therefore, the performance of the negative electrode is rather deteriorated. That is, a composition included in the negative electrode may have an effect on the curling of the negative electrode, but the composition relates to the performance of the negative electrode, and therefore, cannot be adjusted beyond a certain range.

Therefore, it is necessary to study a method capable of minimizing changes in composition and content of the negative electrode and preventing the curling of the negative electrode, in the process of manufacturing a silicon-based negative electrode for maximizing capacity characteristics.

Patent Literature 2 describes a negative electrode for a lithium ion secondary battery, wherein a negative electrode mixture containing a silicon oxide and a carbon material is coated on a collector foil.

Patent Literature 3 describes an electrode that includes an active material-containing layer including an active material and a tabular silicate.

Patent Literature 4 (prior art under Art. 54(3) EPC) describes a composite particle including carbon and silicon, in which the composite particle contains a crystalline metal oxide particle, and the end of the metal oxide particle is present inside the surface of the composite particle, and pores are present on the surface of the composite particle.

Another example of negative electrode is disclosed in Patent Literature 5.

### [Citation List]

(Patent Literature 1) Japanese Patent Application Publication No. 2009-080971
(Patent Literature 2) JP 2017 037748 A
(Patent Literature 3) JP 2021 044225 A
(Patent Literature 4) EP 4 411 893 A1
(Patent Literature 5) EP 3 836 280 A1

### [Detailed Description of the Invention]

### [Technical Problem]

A silicon-based negative electrode requires a highly rigid water-based binder in order to control volume expansion according to charging and discharging, and accordingly, the curling occurs during the manufacturing process of the negative electrode, unlike a carbon-based negative electrode. As a result of research to address the curling, it has been found that the curling can be controlled, depending on a loading amount of the negative electrode for formation of the negative electrode active material layer, together with the content of the binder included in the negative electrode active material layer composition, a thickness of the negative electrode current collector, and a length value of the uncoated region of the negative electrode current collector.

Accordingly, the present application relates to a negative electrode for a lithium secondary battery that satisfies a range of a specific Equation 1 capable of solving the above problems, and a lithium secondary battery including a negative electrode.

### [Technical Solution]

The present invention relates to a negative electrode for a lithium secondary battery as defined in claim 1. The present invention further relates to a lithium secondary battery including a positive electrode; the negative electrode for a lithium secondary battery according to the present application; a separator provided between the positive electrode and the negative electrode; and an electrolyte.

### [Advantageous Effects]

The negative electrode for a lithium secondary battery according to the present application includes the silicon-based active material, and the highly rigid aqueous binder in order to prevent volume expansion according to charging and discharging. At this time, the negative electrode for a lithium secondary battery according to the present application satisfies Equation 1, which is a specific curl parameter. That is, in order to address the curling, which is a problem in the manufacturing process of a negative electrode including a silicon-based active material, the negative electrode that satisfies the parameters of Equation 1 is manufactured, and therefore, the negative electrode has a characteristic capable of controlling only the curling without deterioration of the performance of the existing negative electrode itself.

Equation 1 according to the present application varies according to four control factors, exhibits the advantages of the silicon-based negative electrode, as they are, by changing the manufacturing process of the silicon-based negative electrode rather than largely changing the composition and content of the silicon-based negative electrode, and can prevent the curling, which is the existing problem.

That is, the negative electrode for a lithium secondary battery according to the present application can control the volume expansion and contraction according to charging and discharging, which is a problem caused due to the use of the silicon-based active material, by using the highly rigid water-based binder, and further satisfies Equation 1 to control the curling. Accordingly, it is possible to secure the characteristics of high capacity and high output, which are advantages of the silicon-based negative electrode, and at the same time, to control the negative electrode with deterioration in performance or defect.

### [Brief Description of Drawings]

FIG. 1 shows a laminated structure of a negative electrode for a lithium secondary battery according to an exemplary embodiment of the present application.
FIG. 2 shows a laminated structure of a lithium secondary battery according to the exemplary embodiment of the present application.

### <Explanation of Reference Numerals and Symbols>

10: negative electrode current collector layer
20: negative electrode active material layer
30: separator
40: positive electrode active material layer
50: positive electrode current collector layer
100: negative electrode for lithium secondary battery
200: positive electrode for lithium secondary Battery

### [Best Mode]

Before describing the present invention, some terms are first defined.

When one part "includes", "comprises" or "has" one constituent element in the present specification, unless otherwise specifically described, this does not mean that another constituent element is excluded, but means that another constituent element may be further included.

In the present specification, 'p to q' means a range of 'p or more and q or less'.

In this specification, the "specific surface area" is measured by the BET method, and specifically, is calculated from a nitrogen gas adsorption amount under liquid nitrogen temperature (77K) by using BELSORP-mini II of BEL Japan. That is, in the present application, the BET specific surface area means the specific surface area measured by the above measurement method.

In the present specification, "Dn" means a particle size distribution, and means a particle size at the n% point in the cumulative distribution of the number of particles according to the particle size. That is, D50 is the particle size (center particle size, average particle diameter) at the 50% point in the cumulative distribution of the number of particles according to the particle size, D90 is the particle size at the 90% point in the cumulative distribution of the number of particles according to the particle size, and D10 is the particle size at the 10% point in the cumulative distribution of the number of particles according to the particle size. Meanwhile, the center particle size may be measured using a laser diffraction method. Specifically, powders to be measured are dispersed in a dispersion medium, which is then introduced into a commercially available laser diffraction particle size measurement apparatus (for example, Microtrac S3500) in which a difference in diffraction patterns according to the particle size is measured, when a laser beam passes through particles, and then a particle size distribution is calculated.

In the exemplary embodiment of the present application, the particle size or particle diameter means an average diameter or representative diameter of each grain constituting the particle.

In the present specification, the description "a polymer includes a certain monomer as a monomer unit" means that the monomer participates in a polymerization reaction and is included as a repeating unit in the polymer. In the present specification, when a polymer includes a monomer, this is interpreted as the same as that the polymer includes a monomer as a monomer unit.

In the present specification, it is understood that the term 'polymer' is used in a broad sense including a copolymer unless otherwise specified as 'a homopolymer'.

In the present specification, a weight-average molecular weight (Mw) and a number-average molecular weight (Mn) are polystyrene converted molecular weights measured by gel permeation chromatography (GPC) while employing, as a standard material, a monodispersed polystyrene polymer (standard sample) having various degrees of polymerization commercially available for measuring a molecular weight.

In the present specification, a molecular weight means a weight-average molecular weight unless particularly described otherwise.

An exemplary embodiment of the present specification provides a negative electrode for a lithium secondary battery including a negative electrode current collector layer; and a negative electrode active material layer formed on one surface or both surfaces of the negative electrode current collector layer, in which the negative electrode current collector layer includes a negative electrode coated region on which the negative electrode active material layer is provided and a negative electrode uncoated region on which the negative electrode active material layer is not provided, in which the negative electrode active material layer includes a negative electrode active material layer composition prepared from a negative electrode slurry, in which the negative electrode active material layer composition includes a silicon-based active material, a negative electrode conductive material, and a negative electrode binder, and in which the negative electrode for a lithium secondary battery satisfies Equation 1 below. $10 \leq \left(A1\times A2\right) / \left(B1\times B2/100\right)$ in Equation 1, A1 is a length (mm) of the negative electrode uncoated region, A2 is a thickness (µm) of the negative electrode current collector layer,

B1 is a weight loading amount (mg/25cm²) of the negative electrode slurry, and B2 means parts by weight of the binder on the basis of 100 parts by weight of the negative electrode active material layer composition, wherein the silicon-based active material comprises one or more selected from the group consisting of Si and SiOx (0<x<2), and comprises the Si in an amount of 90 parts by weight or more on the basis of 100 parts by weight of the silicon-based active material.

In the exemplary embodiment of the present application, Equation 1 may satisfy 10 ≤ (A1 x A2) / (B1 X B2 / 100), preferably 10.5 ≤ (A1 x A2) / (B1 X B2 / 100), and more preferably 11 ≤ (A1 x A2) / (B1 X B2 / 100).

In addition, Equation 1 may satisfy a range of (A1 x A2) / (B1 X B2 / 100) ≤ 50, preferably (A1 x A2) / (B1 X B2 / 100) ≤ 45, and more preferably, (A1 x A2) / (B1 X B2 / 100) ≤ 40. In this case, the combination of the upper limit and the lower limit of Equation 1 may include various combinations of the ranges described above.

In the exemplary embodiment of the present application, the final unit of Equation 1 may be indicated as 25 µm x mm x cm²/mg, and may be indicated as 25mm⁴/g when the length units are unified.

The negative electrode for a lithium secondary battery according to the present application can control the volume expansion and contraction according to charging and discharging, which is a problem caused due to the use of the silicon-based active material, by using the highly rigid water-based binder, and satisfies the range of Equation 1 to control the curling. Accordingly, it is possible to secure the characteristics of high capacity and high output, which are advantages of the existing silicon-based negative electrode, without decrease in performance, and at the same time, to control the negative electrode with defects due to the curling.

That is, the water-based binder included in the negative electrode active material layer has a characteristic of being contracted when heated. In the manufacturing process of the negative electrode, a drying process is performed. At this time, drying starts from the uncoated region of the negative electrode current collector layer, and the negative electrode active material layer on a center side of the coated region is dried last. The curling of the negative electrode occurs due to condensation of the binder on the uncoated region side of the negative electrode current collector layer resulting from the drying as described above, and accordingly, a negative electrode defect or breakage occurs. The present application is intended to provide a negative electrode for a lithium secondary battery that satisfies the range of Equation **1,** in order to address the above problems.

Hereinafter, the negative electrode for a lithium secondary battery according to the present application will be described in detail.

An exemplary embodiment of the present application is a negative electrode for a lithium secondary battery including a negative electrode current collector layer; and a negative electrode active material layer formed on one surface or both surfaces of the negative electrode current collector layer, in which the negative electrode current collector layer includes a negative electrode coated region on which the negative electrode active material layer is provided and a negative electrode uncoated region on which the negative electrode active material layer is not provided.

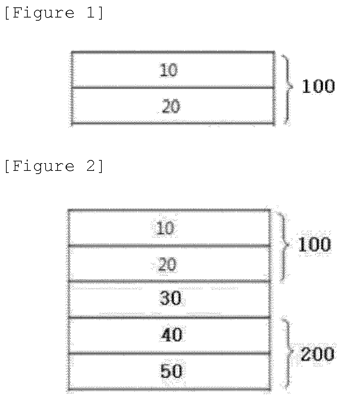

FIG. 1 shows a laminated structure of a negative electrode for a lithium secondary battery according to an exemplary embodiment of the present application. Specifically, a negative electrode 100 for a lithium secondary battery can be seen which includes a negative electrode active material layer 20 on one surface of a negative electrode current collector layer 10. FIG. 1 shows that the negative electrode active material layer is formed on one surface, but the negative electrode active material layer may be formed on both surfaces of the negative electrode current collector layer.

In the exemplary embodiment of the present application, the negative electrode current collector layer is not particularly limited as long as it has high conductivity without causing a chemical change in the battery. For example, copper, stainless steel, aluminum, nickel, titanium, fired carbon, copper or stainless steel each surface-treated with carbon, nickel, titanium, silver, or the like, an aluminum-cadmium alloy, or the like may be used. In addition, the negative electrode current collector layer may have microscopic irregularities formed on a surface to enhance a coupling force of the negative electrode active material, and may be used in various forms such as a film, a sheet, a foil, a net, a porous body, a foamed body, or a non-woven fabric body.

In the exemplary embodiment of the present application, the negative electrode current collector layer may include a negative electrode coated region on which the negative electrode active material layer is provided and a negative electrode uncoated region on which the negative electrode active material layer is not provided. That is, a region of the negative electrode current collector layer on which the negative electrode active material layer is formed may be referred to as a negative electrode coated region, and a region of the negative electrode current collector layer on which the negative electrode active material layer is not formed may be referred to as a negative electrode uncoated region. In this case, the negative electrode uncoated region refers to a region in which the negative electrode active material layer is not coated in order to attach a negative electrode tab when assembling a battery later.

In the exemplary embodiment of the present application, there is provided the negative electrode for a lithium secondary battery in which a thickness (A2) of the negative electrode current collector layer is 1 µm or greater and 100 µm or less and a length (A1) of the negative electrode uncoated region is 1 mm or greater and 50 mm or less.

In the exemplary embodiment of the present application, the thickness (A2) of the negative electrode current collector layer and the length (A1) of the negative electrode uncoated region are used as factors determining the range of Equation 1 according to the present application.

In the exemplary embodiment of the present application, the thickness (A2) of the negative electrode current collector layer may satisfy a range of 1 µm or greater and 100 µm or less, preferably 3 µm or greater and 80 µm or less, more preferably 3 µm or greater and 50 µm or less, and most preferably 3 µm or greater and 30 µm or less.

In the exemplary embodiment of the present application, the length (A1) of the negative electrode uncoated region may satisfy a range of 1 mm or greater and 50 mm or less, preferably 1 mm or greater and 40 mm or less, more preferably 3 mm or greater and 30 mm or less, and most preferably 8 mm or greater and 20 mm or less.

In general, in order to prevent the curling of the negative electrode, the length of the negative electrode uncoated region may be increased as much as possible to widen an area in which bending is generated, thereby spreading force. Alternatively, the negative electrode current collector layer may be formed thick, thereby minimizing the curling. The negative electrode uncoated region is a part for making a tab through which electrons can move so that the electrode becomes a battery. If the length of the negative electrode uncoated region is recklessly increased, the negative electrode active material layer is not formed so much as that, and therefore, high capacity and high output cannot be implemented. If the thickness of the negative electrode current collector layer becomes beyond a certain range, rigidity capable of withstanding stress is secured, but it is not good in terms of cost and energy density.

Therefore, the negative electrode for a lithium secondary battery according to the present application is characterized by satisfying the range of Equation 1, and furthermore, the length (A1) of the negative electrode uncoated region and the thickness (A2) of the negative electrode current collector layer satisfy the above ranges. Accordingly, the capacity of the negative electrode active material layer can be maximized, and therefore, the characteristics of high capacity and high output can be maintained, and at the same time, the bending of the negative electrode due to the curling can be prevented.

An exemplary embodiment of the present application includes a negative electrode current collector layer; and a negative electrode active material layer formed on one surface or both surfaces of the negative electrode current collector layer.

In the exemplary embodiment of the present application, the negative electrode active material layer includes a negative electrode active material layer composition prepared from a negative electrode slurry, and the negative electrode active material layer composition includes a silicon-based active material; a negative electrode conductive material; and a negative electrode binder. The silicon-based active material comprises Si in an amount of 90 parts by weight or more on the basis of 100 parts by weight of the silicon-based active material

In the exemplary embodiment of the present application, the negative electrode for a lithium secondary battery may be formed by applying and drying a negative electrode slurry including the negative electrode active material layer composition to one surface or both surfaces of the negative electrode current collector layer.

In this case, the negative electrode slurry may include the negative electrode active material layer composition described above, and a slurry solvent.

In the exemplary embodiment of the present application, a solid content of the negative electrode slurry may satisfy a range of 5% or more and 40% or less.

In another exemplary embodiment, the solid content of the negative electrode slurry may satisfy a range of 5% or more and 40% or less, preferably 7% or more and 35% or less, and more preferably 10% or more and 30% or less.

The solid content of the negative electrode slurry means a content of the negative electrode active material layer composition included in the negative electrode slurry, and means a content of the negative electrode active material layer composition on the basis of 100 parts by weight of the negative electrode slurry.

When the solid content of the negative electrode slurry satisfies the above range, the viscosity is appropriate during formation of the negative electrode active material layer, so that particle aggregation of the negative electrode active material layer composition is minimized to efficiently form the negative electrode active material layer.

In the exemplary embodiment of the present application, the slurry solvent may be used without limitation as long as it can dissolve the negative electrode active material layer composition, and specifically, water, acetone, or NMP may be used.

In the exemplary embodiment of the present application, there is provided the negative electrode for a lithium secondary battery in which a weight loading amount (B1) of the negative electrode slurry is 80 mg/25 cm² or more and 160 mg/25 cm² or less.

In another exemplary embodiment, the weight loading amount (B1) of the negative electrode slurry may satisfy a range of 80 mg/25 cm² or more and 160 mg/25 cm² or less, preferably 85 mg/25 cm² or more and 140 mg/25 cm² or less, and more preferably 85 mg/25 cm² or more and 130 mg/25cm² or less.

The weight loading amount of the negative electrode slurry means an amount of the negative electrode slurry applied to the negative electrode current collector layer. At this time, the weight loading amount of the negative electrode slurry satisfies the above range, so that the characteristic of maximizing the performance characteristics (capacity, output) of the negative electrode is provided, and the range of Equation 1 is satisfied, thereby preventing the curling. That is, considering the amount and energy density of the binder included together, the above range corresponds to the optimal range. If the weight loading amount exceeds the range, the energy density increases, but the content of the binder is instead high, so the curling cannot be prevented. If the weight loading amount is below the above range, the curling can be controlled, but the desired energy density cannot be achieved.

Hereinafter, the silicon-based active material, the negative electrode conductive material, and the binder included in the negative electrode active material layer composition of the present application will be described.

On the basis of 100 parts by weight of the silicon-based active material, Si is included in amount of 90 parts by weight or more and 100 parts by weight or less, preferably 99 parts by weight or less, and more preferably 95 parts by weight or less.

In the exemplary embodiment of the present application, the silicon-based active material may particularly use pure silicon (Si) as the silicon-based active material. The use of pure silicon (Si) as the silicon-based active material means that, on the basis of 100 parts by weight of the total silicon-based active material as described above, pure Si not bonded to other particles or elements are included within the above range.

An average particle diameter (D50) of the silicon-based active material of the present invention may be 5 µm to 10 um, specifically 5.5 µm to 8 um, and more specifically 6 µm to 7 µm. When the average particle diameter is within the above range, a specific surface area of the particles is within a suitable range, so that a viscosity of a negative electrode slurry is formed within an appropriate range. Accordingly, the particles constituting the negative electrode slurry are smoothly dispersed. In addition, when the size of the silicon-based active material has a value equal to or greater than the lower limit value, a contact area between the silicon particles and the conductive material is excellent due to the composite made of the conductive material and the binder in the negative electrode slurry, so that a possibility of continuing conductive network increases, thereby increasing the capacity retention. In the meantime, when the average particle diameter satisfies the above range, excessively large silicon particles are excluded, so that a surface of the negative electrode is formed smooth. Accordingly, a current density non-uniformity phenomenon during charging and discharging can be prevented.

In the exemplary embodiment of the present application, the silicon-based active material generally has a characteristic BET specific surface area. The BET specific surface area of the silicon-based active material is preferably 0.01 to 150.0 m²/g, more preferably 0.1 to 100.0 m²/g, particularly preferably 0.2 to 80.0 m²/g, and most preferably 0.2 to 18.0 m²/g. The BET specific surface area is measured in accordance with DIN 66131 (using nitrogen).

In the exemplary embodiment of the present application, the silicon-based active material may be present, for example, in a crystalline or amorphous form, and is preferably not porous. The silicon particles are preferably spherical or splinter-shaped particles. Alternatively, but less preferably, the silicon particles may also have a fiber structure or be present in the form of a silicon-containing film or coating.

In the exemplary embodiment of the present application, there is provided the negative electrode for a lithium secondary battery in which the silicon-based active material is included in an amount of 60 parts by weight or more on the basis of 100 parts by weight of the negative electrode active material layer composition.

In another exemplary embodiment, the silicon-based active material may be included in an amount of 60 parts by weight or more, preferably 65 parts by weight or more, and more preferably 70 parts by weight or more, and 95 parts by weight or less, preferably 90 parts by weight or less, and more preferably 85 parts by weight or less on the basis of 100 parts by weight of the negative electrode active material layer composition.

The negative electrode active material layer composition according to the present application satisfies the range of Equation 1 to prevent the curling and exhibits the high-capacity characteristics while using a certain amount of the water-based polymer binder capable of controlling the volume expansion rate during charging and discharging even when the silicon-based active material having a significantly high capacity is used within the above range.

In the exemplary embodiment of the present application, the silicon-based active material may have a non-spherical shape and its sphericity (circularity) is, for example, 0.9 or less, for example, 0.7 to 0.9, for example 0.8 to 0.9, and for example 0.85 to 0.9.

In the present application, the sphericity is determined by Equation A-1, in which A is an area and P is a boundary line.

### [Equation A-1]

### 4πA/P²

In the related art, it is general to use only graphite-based compounds as the negative electrode active material. However, in recent years, as the demand for high-capacity batteries is increasing, attempts to mix and use silicon-based compounds are increasing in order to increase capacity. However, in the case of a silicon-based active material, even when the characteristics of the silicon-based active material itself are partially adjusted as described above, the volume may rapidly expand during the charging/discharging, thereby causing some problems of damaging the conductive path formed in the negative electrode active material layer.

Therefore, in the exemplary embodiment of the present application, the negative electrode conductive material may include one or more selected from the group consisting of a point-type conductive material, a planar conductive material and a linear conductive material.

In the exemplary embodiment of the present application, the point-type conductive material refers to a conductive material that may be used for improving conductivity of the negative electrode, has conductivity without causing a chemical change and has a spherical or point shape. Specifically, the point-type conductive material may be at least one species selected from the group consisting of natural graphite, artificial graphite, carbon black, acetylene black, Ketjen black, channel black, furnace black, lamp black, thermal black, conductive fiber, fluorocarbon, aluminum powder, nickel powder, zinc oxide, potassium titanate, titanium oxide, and a polyphenylene derivative, and preferably may include carbon black in terms of high conductivity and excellent dispersibility.

In the exemplary embodiment of the present application, the point-type conductive material may have a BET specific surface area of 40 m²/g or greater and 70 m²/g or less, preferably 45 m²/g or greater and 65 m²/g or less, and more preferably 50 m²/g or greater and 60 m²/g or less.

In the exemplary embodiment of the present application, a functional group content (volatile matter) of the point-type conductive material may satisfy a range of 0.01% or more and 1% or less, preferably 0.01% or more and 0.3% or less, and more preferably 0.01% or more and 0.1% or less.

In particular, when the functional group content of the point-type conductive material satisfies the above range, a functional group is present on a surface of the point-type conductive material, so that the point-type conductive material can be smoothly dispersed in a solvent when water is used as the solvent.

In the exemplary embodiment of the present application, the point-type conductive material having the functional group content within the range is included together with the silicon-based active material, and the functional group content can be adjusted according to a degree of heat treatment of the point-type conductive material.

In the exemplary embodiment of the present application, the particle diameter of the point-type conductive material may be 10 nm to 100 nm, preferably 20 nm to 90 nm, and more preferably 20 nm to 60 nm.

In the exemplary embodiment of the present application, the conductive material may include a planar conductive material.

The planar conductive material can improve conductivity by increasing surface contact between silicon particles in the negative electrode and at the same time suppress the disconnection of the conductive path due to the volume expansion, and may be expressed as a plate-shaped conductive material or a bulk-type conductive material.

In the exemplary embodiment of the present application, the planar conductive material may include at least one selected from the group consisting of plate-like graphite, graphene, graphene oxide, and graphite flakes, and preferably may be plate-like graphite.

In the exemplary embodiment of the present application, the average particle diameter (D50) of the planar conductive material may be 2 µm to 7 µm, specifically 3 µm to 6 µm, and more specifically 4 µm to 5 µm. When the above range is satisfied, the sufficient particle size results in easy dispersion without causing an excessive increase in viscosity of the negative electrode slurry. Therefore, the dispersion effect is excellent when dispersing using the same equipment and time.

In the exemplary embodiment of the present application, there is provided a negative electrode active material layer composition in which the planar conductive material having D10 of 0.5 µm or greater and 1.5 µm or less, D50 of 2.5 µm or greater and 3.5 µm or less and D90 of 7.0 µm or greater and 15.0 µm or less.

In the exemplary embodiment of the present application, for the planar conductive material, a planar conductive material with a high specific surface area having a high BET specific surface area or a planar conductive material with a low specific surface area may be used.

In the exemplary embodiment of the present application, for the planar conductive material, a planar conductive material with a high specific surface area or a planar conductive material with a low specific surface area may be used without limitation. However, in particular, the planar conductive material according to the present application can be affected to some extent in the electrode performance by the dispersion effect, so that a planar conductive material with a low specific surface area that does not cause a problem in dispersion is used particularly preferably.

In the exemplary embodiment of the present application, the planar conductive material may have a BET specific surface area of 5 m²/g or greater.

In another exemplary embodiment, the planar conductive material may have a BET specific surface area of 5 m²/g or greater and 500m²/ g or less, preferably 5 m²/g or greater and 300 m²/g or less, and more preferably 5 m²/g or greater and 250 m²/g or less.

In another exemplary embodiment, the planar conductive material is a planar conductive material with a high specific surface area, and the BET specific surface area may satisfy a range of 50 m²/g or greater and 500 m²/g or less, preferably 80 m²/g or greater and 300 m²/g or less, and more preferably 100 m²/g or greater and 300 m²/g or less.

In another exemplary embodiment, the planar conductive material is a planar conductive material with a low specific surface area, and the BET specific surface area may satisfy a range of 5 m²/g or greater and 40 m²/g or less, preferably 5 m²/g or greater and 30 m²/g or less, and more preferably 5 m²/g or greater and 25 m²/g or less.

Other conductive materials may include linear conductive materials such as carbon nanotubes. The carbon nanotubes may be bundle-type carbon nanotubes. The bundle-type carbon nanotubes may include a plurality of carbon nanotube units. Specifically, the term 'bundle type' herein refers to, unless otherwise specified, a bundle or rope-shaped secondary shape in which a plurality of carbon nanotube units are aligned side by side or entangled in such an orientation that longitudinal axes of the carbon nanotube units are substantially the same. The carbon nanotube unit has a graphite sheet having a cylindrical shape with a nano-sized diameter, and has an sp2 bonding structure. In this case, the characteristics of a conductor or a semiconductor may be exhibited depending on the rolled angle and structure of the graphite sheet. As compared with entangled-type carbon nanotubes, the bundle-type carbon nanotubes can be more uniformly dispersed during the manufacture of the negative electrode, and can form more smoothly a conductive network in the negative electrode to improve the conductivity of the negative electrode.

In the exemplary embodiment of the present application, the linear conductive material may include SWCNT or MWCNT.

In the exemplary embodiment of the present application, the negative electrode conductive material may be included in an amount of 5 parts by weight or more and 40 parts by weight or less, on the basis of 100 parts by weight of the negative electrode active material layer composition.

In another exemplary embodiment, the negative electrode conductive material may be included in an amount of 5 parts by weight or more and 40 parts by weight or less, preferably 10 parts by weight or more and 30 parts by weight or less, and more preferably 10 parts by weight or more and 25 parts by weight or less, on the basis of 100 parts by weight of the negative electrode active material layer composition.

In the exemplary embodiment of the present application, there is provided the negative electrode for a lithium secondary battery in which the negative electrode conductive material includes a planar conductive material and a linear conductive material.

In the exemplary embodiment of the present application, the negative electrode conductive material may include a planar conductive material and a linear conductive material, and may include 0.01 part by weight or more and 10 parts by weight or less of the linear conductive material, and 90 parts by weight or more and 99.99 parts by weight or less of the planar conductive material, on the basis of 100 parts by weight of the negative electrode conductive material.

In another exemplary embodiment, the linear conductive material may be included in an amount of 0.01 part by weight or more and 10 parts by weight or less, preferably 0.05 part by weight or more and 5 parts by weight or less, and more preferably 0.1 part by weight or more and 3 parts by weight or less, on the basis of 100 parts by weight of the negative electrode conductive material.

In another exemplary embodiment, the planar conductive material may be included in an amount of 90 parts by weight or more and 99.99 parts by weight or less, preferably 95 parts by weight or more and 99.95 parts by weight or less, and more preferably 97 parts by weight or more and 99.9 parts by weight or less, on the basis of 100 parts by weight of the negative electrode conductive material.

In particular, in the exemplary embodiment of the present application, as the negative electrode conductive material includes the planar conductive material and the linear conductive material and the composition and ratio described above are satisfied, respectively, the lifespan characteristics of an existing lithium secondary battery are not significantly affected, and the number of points where charging and discharging are possible increases, so that output characteristics are excellent at a high C-rate.

The negative electrode conductive material according to the present application has a completely different configuration from a positive electrode conductive material that is applied to the positive electrode. That is, the negative electrode conductive material according to the present application serves to hold the contact between silicon-based active materials whose volume expansion of the electrode is very large due to charging and discharging, and the positive electrode conductive material serves to impart some conductivity while serving a buffer at the time of roll-pressing, and is completely different from the negative electrode conductive material of the present invention in terms of configuration and role.

In addition, the negative electrode conductive material according to the present application is applied to a silicon-based active material, and has a completely different configuration from that of a conductive material that is applied to a graphite-based active material. That is, since a conductive material that is used for an electrode having a graphite-based active material simply has smaller particles than the active material, the conductive material has characteristics of improving output characteristics and imparting some conductivity, and are completely different from the negative electrode conductive material that is applied together with the silicon-based active material as in the present invention, in terms of configuration and role.

In the exemplary embodiment of the present application, the planar conductive material that is used as the negative electrode conductive material described above has a different structure and role from those of the carbon-based active material that is generally used as the existing negative electrode active material. Specifically, the carbon-based active material that is used as the negative electrode active material may be artificial graphite or natural graphite, and refers to a material that is processed into a spherical or point-type shape and used, so as to facilitate storage and release of lithium ions.

On the other hand, the planar conductive material that is used as the negative electrode conductive material is a material having a plane or plate shape, and may be expressed as plate-like graphite. That is, the planar conductive material is a material that is included so as to maintain a conductive path in the negative electrode active material layer, and means a material for securing a conductive path in a planar shape inside the negative electrode active material layer, rather than playing a role in storing and releasing lithium.

That is, in the present application, the use of plate-like graphite as a conductive material means that graphite is processed into a planar or plate-like shape and used as a material for securing a conductive path rather than playing a role in storing or releasing lithium. In this case, the negative electrode active material included together has high capacity characteristics with respect to storing and releasing lithium, and serves to store and release all lithium ions transferred from the positive electrode.

On the other hand, in the present application, the use of a carbon-based active material as an active material means that the carbon-based active material is processed into a point or spherical shape and used as a material for storing or releasing lithium.

That is, in the exemplary embodiment of the present application, artificial graphite or natural graphite, which is a carbon-based active material, has a point-like shape, and a BET specific surface area thereof may satisfy a range of 0.1 m²/g or greater and 4.5 m²/g or less. In addition, plate-like graphite, which is a planar conductive material, has a planar shape, and a BET specific surface area thereof may be 5 m²/g or greater.

In the exemplary embodiment of the present application, the negative electrode binder may include at least one selected from the group consisting of polyvinylidenefluoride-hexafluoropropylene copolymer (PVDF-co-HFP), polyvinylidenefluoride, polyacrylonitrile, polymethylmethacrylate, polyvinyl alcohol, carboxymethylcellulose (CMC), starch, hydroxypropylcellulose, regenerated cellulose, polyvinylpyrrolidone, polytetrafluoroethylene, polyethylene, polypropylene, polyacrylic acid, ethylene-propylene-diene monomer (EPDM), sulfonated EPDM, styrene butadiene rubber (SBR), fluoro rubber, poly acrylic acid, and the above-mentioned materials in which a hydrogen is substituted with Li, Na, Ca, etc., and may also include various copolymers thereof.

The negative electrode binder according to an exemplary embodiment of the present application serves to hold the active material and the conductive material in order to prevent distortion and structural deformation of the negative electrode structure in volume expansion and relaxation of the silicon-based active material. When such roles are satisfied, all of the general binders can be applied. Specifically, a water-based binder may be used, and more specifically, a PAM-based binder may be used.

In the exemplary embodiment of the present application, there is provided the negative electrode for a lithium secondary battery in which the negative electrode binder includes a water-based binder and the negative electrode binder is included in an amount of 5 parts by weight or more and 15 parts by weight or less, on the basis of 100 parts by weight of the negative electrode active material layer composition.

In another exemplary embodiment, the negative electrode binder may be included in an amount of 5 parts by weight or more and 15 parts by weight or less, preferably 7 parts by weight or more and 13 parts by weight or less, and more preferably 10 parts by weight or more and 12 parts by weight or less, on the basis of 100 parts by weight of the negative electrode active material layer composition.

In the case of the negative electrode for a lithium secondary battery according to the present application, the silicon-based active material is used in order to maximize capacity characteristics, and volume expansion during charging and discharging is greater than when a conventional carbon-based active material is used. Existing carbon-based active materials mainly use rubber-based binders with low rigidity due to low volume expansion, and also do not cause the curl phenomenon that occurs in silicon-based negative electrodes, due to the low content of the binder.

However, in order to control the volume expansion of the silicon-based active material, the water-based binder with high rigidity as described above is applied, and accordingly, the curling becomes problematic. However, the negative electrode for a lithium secondary battery according to the present application satisfies the range of Equation 1 described above, and at the same time, the parts by weight (B2) of the negative electrode binder satisfies the above range, so that the volume expansion of the silicon-based active material can be easily controlled and the cell performance degradation can be prevented. If the binder exceeds the above range, the content of the binder increases, making it difficult to control the curling even by adjusting the weight loading amount described above. On the other hand, if the content of the binder is small, the curling can be controlled but the volume expansion of the silicon-based negative electrode cannot be controlled, and as a result, the lifespan characteristics are significantly deteriorated.

That is, the curling is simply most affected by the content (B2) of the binder. A problem occurs when the content of the binder is low but the loading value is high, and conversely, a problem occurs when the content of the content of the binder is high even though the loading is low.

Accordingly, the present application combines the content of the binder and the loading amount to optimize the content of the binder (B2) while adjusting the loading amount (B1) within an appropriate range to maximize the capacity characteristics and energy density, which are characteristics of Pure Si. That is, the feature of the present application is that the optimal ratio is derived by adjusting a relationship between the total negative electrode loading amount and the binder (adjusting a relationship between B1 and B2) rather than simply reducing the content of the binder.

In the exemplary embodiment of the present application, a porosity of the negative electrode active material layer may satisfy a range of 10% or greater and 60% or less.

In another exemplary embodiment, the porosity of the negative electrode active material layer may satisfy a range of 10% or greater and 60% or less, preferably 20% or greater and 50% or less, and more preferably 30% or greater and 45% or less.

The porosity varies depending on compositions and contents of the silicon-based active material, conductive material and binder included in the negative electrode active material layer, and in particular, satisfies the range described above when the silicon-based active material and the conductive material according to the present application are included in the specific compositions and contents, so that the electrode has appropriate ranges of electrical conductivity and resistance.

An exemplary embodiment of the present application provides a lithium secondary battery including a positive electrode; the negative electrode for a lithium secondary battery according to the present application; a separator provided between the positive electrode and the negative electrode; and an electrolyte.

FIG. 2 shows a laminated structure of a lithium secondary battery according to the exemplary embodiment of the present application. Specifically, a negative electrode 100 for a lithium secondary battery including the negative electrode active material layer 20 on one surface of the negative electrode current collector layer 10 can be seen, a positive electrode 200 for a lithium secondary battery including a positive electrode active material layer 40 on one surface of a positive electrode current collector layer 50 can be seen, and the negative electrode 100 for a lithium secondary battery and the positive electrode 200 for a lithium secondary battery are formed in a laminated structure with a separator 30 interposed therebetween.

The secondary battery according to the exemplary embodiment of the present invention may particularly include the negative electrode for a lithium secondary battery described above. Specifically, the secondary battery may include a negative electrode, a positive electrode, a separator interposed between the positive electrode and the negative electrode, and an electrolyte, and the negative electrode is the same as the negative electrode described above. Since the negative electrode has been described above, a detailed description thereof is omitted.

The positive electrode may include a positive electrode current collector and a positive electrode active material layer formed on the positive electrode current collector and including the positive electrode active material.

In the positive electrode, the positive electrode current collector is not particularly limited as long as it has conductivity without causing a chemical change in the battery. For example, stainless steel, aluminum, nickel, titanium, fired carbon, aluminum or stainless steel each surface treated with carbon, nickel, titanium, silver, or the like, or the like may be used. In addition, the positive electrode current collector may typically have a thickness of 3 to 500 µm, and a surface of the current collector may be formed with microscopic irregularities to enhance adhesive force of the positive electrode active material. For example, the positive electrode current collector may be used in various forms such as a film, a sheet, a foil, a net, a porous body, a foamed body, and a non-woven fabric body.

The positive electrode active material may be a positive electrode active material that is typically used. Specifically, the positive electrode active material may be a layered compound such as a lithium cobalt oxide (LiCoO₂) and a lithium nickel oxide (LiNiO₂), or a compound substituted with one or more transition metals; a lithium iron oxide such as LiFe₃O₄; a lithium manganese oxide such as chemical formula Li_{1+c1}Mn_{2-c1}O₄ (0≤c1≤0.33), LiMnO₃, LiMn₂O₃ and LiMnO₂; a lithium copper oxide (Li₂CuO₂); a vanadium oxide such as LiV₃O₈, V₂O₅ and Cu₂V₂O₇; a Ni-site type lithium nickel oxide represented by chemical formula LiNi_{1-c2}M_{c2}O₂ (where M is at least one selected from the group consisting of Co, Mn, Al, Cu, Fe, Mg, B, and Ga, and satisfies 0.01≤c2≤0.3); a lithium manganese composite oxide represented by chemical formula LiMn_{2-c3}M_{c3}O₂ (where M is at least one selected from the group consisting of Co, Ni, Fe, Cr, Zn and Ta, and satisfies 0.01≤c3≤0.1) or Li₂Mn₃MO₈ (where M is at least one selected from the group consisting of Fe, Co, Ni, Cu and Zn); LiMn₂O₄ in which a part of Li of the chemical formula is substituted with an alkaline earth metal ion, or the like, but is not limited thereto. The positive electrode may be Li metal.

The positive electrode active material layer may include a positive electrode conductive material and a positive electrode binder together with the positive electrode active material described above.

In this case, the positive electrode conductive material is used to impart conductivity to the electrode, and can be used without particular limitation as long as the positive electrode conductive material has electronic conductivity without causing a chemical change in a battery. Specific examples may include graphite such as natural graphite and artificial graphite; a carbon-based material such as carbon black, acetylene black, Ketjen black, channel black, furnace black, lamp black, thermal black and carbon fiber; metal powders or metal fibers such as copper, nickel, aluminum and silver; a conductive whisker such as zinc oxide and potassium titanate; a conductive metal oxide such as titanium oxide; or a conductive polymer such as polyphenylene derivative, or the like, and any one thereof or a mixture of two or more thereof may be used.

In addition, the positive electrode binder serves to improve adhesion between particles of the positive electrode active material and adhesive force between the positive electrode active material and the positive electrode current collector. Specific examples may include polyvinylidene fluoride (PVDF), vinylidene fluoride-hexafluoropropylene copolymer (PVDF-co-HFP), polyvinyl alcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene polymer (EPDM), sulfonated-EPDM, styrene butadiene rubber (SBR), fluoro rubber, or various copolymers thereof, and the like, and any one thereof or a mixture of two or more thereof may be used.

The separator serves to separate the negative electrode and the positive electrode and to provide a movement path of lithium ions, in which any separator may be used as the separator without particular limitation as long as it is typically used in a secondary battery, and particularly, a separator having high moisture-retention ability for an electrolyte as well as a low resistance to the movement of electrolyte ions may be preferably used. Specifically, a porous polymer film, for example, a porous polymer film manufactured from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used.

In addition, a typical porous non-woven fabric, for example, a non-woven fabric formed of high melting point glass fibers, polyethylene terephthalate fibers, or the like may be used. Furthermore, a coated separator including a ceramic component or a polymer material may be used to secure heat resistance or mechanical strength, and the separator having a single layer or multilayer structure may be selectively used.

Examples of the electrolyte may include an organic liquid electrolyte, an inorganic liquid electrolyte, a solid polymer electrolyte, a gel-type polymer electrolyte, a solid inorganic electrolyte, or a molten-type inorganic electrolyte that may be used in the manufacturing of the lithium secondary battery, but are not limited thereto.

Specifically, the electrolyte may include a non-aqueous organic solvent and a metal salt.

As the non-aqueous organic solvent, for example, an aprotic organic solvent such as N-methyl-2-pyrrolidinone, propylene carbonate, ethylene carbonate, butylene carbonate, dimethyl carbonate, diethyl carbonate, gamma-butyrolactone, 1,2-dimetoxy ethane, tetrahydrofuran, 2-methyltetrahydrofuran, dimethylsulfoxide, 1,3-dioxolane, formamide, dimethylformamide, dioxolane, acetonitrile, nitromethane, methyl formate, methyl acetate, phosphoric acid triester, trimethoxy methane, dioxolane derivative, sulfolane, methyl sulfolane, 1,3-dimethyl-2-imidazolidinone, propylene carbonate derivative, tetrahydrofuran derivative, ether, methyl propionate, or ethyl propionate may be used.

In particular, among the carbonate-based organic solvents, ethylene carbonate and propylene carbonate, which are cyclic carbonates, are high-viscosity organic solvents and can be preferably used because they have high permittivity to dissociate a lithium salt well. When the cyclic carbonate is mixed with a linear carbonate with low viscosity and low permittivity, such as dimethyl carbonate or diethyl carbonate, in a suitable ratio and used, an electrolyte having high electric conductivity may be prepared, and therefore, may be more preferably used.

A lithium salt may be used as the metal salt, and the lithium salt is a material that is readily soluble in the non-aqueous electrolyte, in which, for example, one or more species selected from the group consisting of F⁻, Cl⁻, I⁻, NO₃⁻, N(CN)₂₋, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻ and (CF₃CF₂SO₂)₂N⁻ may be used as an anion of the lithium salt.

One or more additives, for example, a haloalkylene carbonate-based compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte for the purpose of improving lifetime characteristics of the battery, suppressing a decrease in battery capacity, improving discharge capacity of the battery, and the like, in addition to the above-described electrolyte components.

An exemplary embodiment of the present invention provides a battery module including the secondary battery as a unit cell, and a battery pack including the same. Since the battery module and the battery pack include the secondary battery having high capacity, high rate capability, and high cycle characteristics, the battery module and the battery pack may be used as a power source of a medium to large sized device selected from the group consisting of an electric vehicle, a hybrid electric vehicle, a plug-in hybrid electric vehicle, and a power storage system.

Hereinafter, preferred examples will be provided for better understanding of the present invention. It will be apparent to one skilled in the art that the examples are only provided to illustrate the present invention and various modifications and alterations are possible within the scope of the present invention. Such modifications and alterations naturally fall within the scope of claims included herein.

### <Manufacturing Examples>

### <Manufacturing of Negative Electrode>

Si (average particle diameter (D50): 3.5 µm) serving as a silicon-based active material, a first conductive material, a second conductive material, and polyacrylamide (PAM) serving as a binder were added to distilled water serving as a solvent for formation of a negative electrode slurry in a weight ratio of 70:10:0.315:9.685 to manufacture a negative electrode slurry (solid content concentration: 25 wt.%).

The first conductive material was plate-shaped graphite (specific surface area: 17m²/g, average particle diameter (D50): 3.5 µm), and the second conductive material was SWCNT.

As a specific mixing method, after dispersing the first conductive material, the second conductive material, the binder and water at 2500 rpm for 30 minutes with a homo mixer, the silicon-based active material was added to the dispersion, which was then dispersed at 2500 rpm for 30 minutes to prepare a negative electrode slurry.

The negative electrode slurry was coated on one surface of a copper current collector as a negative electrode current collector layer whose thickness satisfied Table 1 in the weight loading amount shown in Table 1, roll-pressed, and then dried in a vacuum oven at 130°C for 10 hours to form a negative electrode active material layer, a negative electrode coated region, and a negative electrode uncoated region of Table 1, which was prepared as a negative electrode (porosity of negative electrode: 40.0%).

**[Table 1]**

| | Length of negative electrode uncoated region A1 (mm) | Thickness A2 of negative electrode current collector layer (µm) | Weight loading amount B1 of negative electrode slurry (mg/25cm²) | Parts by weight B2 of binder on the basis of 100 parts by weight of negative electrode active material layer composition (parts by weight) |
|---|---|---|---|---|
| Example 1 | 12 | 15 | 111 | 9.685 |
| Example 2 | 10 | 15 | 121 | 9.685 |
| Example 3 | 12 | 8 | 87.3 | 9.685 |
| Example 4 | 20 | 6 | 111 | 9.685 |
| Example 5 | 14 | 20 | 92 | 9.685 |
| Comparative Example 1 | 8.5 | 15 | 166 | 9.685 |
| Comparative Example 2 | 7 | 15 | 111 | 9.685 |
| Comparative Example 3 | 12 | 4 | 111 | 9.685 |
| Comparative Example 4 | 12 | 15 | 190 | 9.685 |

Calculation results of Equation 1 of the present invention with respect to Table 1 are shown in Table 2, and whether the curling occurred is shown in Table 3.

**[Table 2]**

| | [Equation 1] |
|---|---|
| Example 1 | 16.7 |
| Example 2 | 12.8 |
| Example 3 | 11.36 |
| Example 4 | 11.16 |
| Example 5 | 31.45 |
| Comparative Example 1 | 7.93 |
| Comparative Example 2 | 9.77 |
| Comparative Example 3 | 4.47 |
| Comparative Example 4 | 9.78 |

**[Table 3]**

| | Whether curling occurred |
|---|---|
| Example 1 | X |
| Example 2 | X |
| Example 3 | X |
| Example 4 | X |
| Example 5 | X |
| Comparative Example 1 | ○ |
| Comparative Example 2 | O |
| Comparative Example 3 | O |
| Comparative Example 4 | △ |

In Table 3, the drying process was performed after manufacturing the negative electrode as described above, and at this time, a case in which no breakage occurred and no curling occurred is denoted with X, a case in which electrode production was difficult due to breakage in the drying process is denoted with O, and a case in which some curling occurred during the drying process and did not reach breakage but a defect occurred in electrode production is denoted with △.

Seeing Examples 1 to 5 and Comparative Examples 1 to 4, it could be confirmed that the negative electrode for a lithium secondary battery according to the present application could control the volume expansion and contraction during charging and discharging, which is a problem due to the use of a silicon-based active material, by the highly rigid water-based binder, and furthermore, satisfied Equation 1 to control the curling in the electrode production process, thereby securing the characteristics of high capacity and high output, which are advantages of the silicon-based negative electrode, and at the same time, and controlling the negative electrode with deterioration in performance or defect.

Comparative Example 2 has the same conditions as those of Example 1, but corresponds to a case in which the length of the uncoated region was smaller than that of Example 1 and was below the lower limit of Equation 1. In this case, it could be confirmed that the thickness of the negative electrode uncoated region was smaller and a radius of bending due to the contraction of the highly rigid binder was smaller, resulting in curling of the negative electrode.

Comparative Example 3 has the same conditions as those of Example 1, but corresponds to a case in which the thickness of the negative electrode current collector was small and was below the lower limit of Equation 1. In this case, it could be confirmed that due to the rigidity of the Si active material itself, the negative electrode current collector itself was bent or the negative electrode current collector layer was broken during the coating process of the negative electrode, and the curling occurred in the drying process even though the negative electrode current collector layer was not broken in the coating process, thereby causing a problem in electrode manufacturing.

Comparative Example 4 has the same conditions as those of Example 1, but corresponds to a case in which the weight loading amount of the negative electrode slurry was larger and was below the lower limit of Equation 1. In this case, it could be confirmed that since the large amount of the water-based binder was included in the negative electrode, water as a solvent was dried during the drying process, and condensation of the water-based binder occurred, resulting in curling. That is, Comparative Example 4 is a case where the weight loading amount of the negative electrode slurry is large, and a case in which the content of the negative electrode binder increases and becomes out of Equation 1 can also be interpreted similarly.

## Claims

1. A negative electrode for a lithium secondary battery comprising:
a negative electrode current collector layer; and
a negative electrode active material layer formed on one surface or both surfaces of the negative electrode current collector layer,
wherein the negative electrode current collector layer comprises a negative electrode coated region on which the negative electrode active material layer is provided and a negative electrode uncoated region on which the negative electrode active material layer is not provided,
wherein the negative electrode active material layer comprises a negative electrode active material layer composition, which is prepared from a negative electrode slurry,
wherein the negative electrode active material layer composition comprises a silicon-based active material, a negative electrode conductive material, and a negative electrode binder, and
wherein the negative electrode for the lithium secondary battery satisfies Equation 1 below: $10 \leq \left(A1\times A2\right) / \left(B1\times B2/100\right)$
in Equation 1, A1 is a length (mm) of the negative electrode uncoated region, A2 is a thickness (µm) of the negative electrode current collector layer,
B1 is a weight loading amount (mg/25cm²) of the negative electrode slurry, and B2 means parts by weight of the negative electrode binder on the basis of 100 parts by weight of the negative electrode active material layer composition;
**characterised in that** the silicon-based active material comprises Si in an amount of 90 parts by weight or more on the basis of 100 parts by weight of the silicon-based active material.

2. The negative electrode for the lithium secondary battery of claim 1, wherein the silicon-based active material is included in an amount of 60 parts by weight or more on the basis of 100 parts by weight of the negative electrode active material layer composition.

3. The negative electrode for the lithium secondary battery of claim 1, wherein the negative electrode conductive material is included in an amount of 5 part by weight or more and 40 parts by weight or less on the basis of 100 parts by weight of the negative electrode active material layer composition.

4. The negative electrode for the lithium secondary battery of claim 1, wherein the negative electrode conductive material comprises a planar conductive material and a linear conductive material.

5. The negative electrode for the lithium secondary battery of claim 1, wherein the negative electrode binder comprises a water-based binder, and
wherein the negative electrode binder is included in an amount of 5 parts by weight or more and 15 parts by weight or less on the basis of 100 parts by weight of the negative electrode active material layer composition.

6. The negative electrode for the lithium secondary battery of claim 1, wherein the thickness (A2) of the negative electrode current collector layer is 1 µm or greater and 100 µm or less, and
wherein the length (A1) of the negative electrode uncoated region is 1 mm or greater and 50 mm or less.

7. The negative electrode for the lithium secondary battery of claim 1, wherein the weight loading amount (B1) of the negative electrode slurry is 80 mg/25 cm² or more and 160 mg/25 cm² or less.

8. A lithium secondary battery comprising:
a positive electrode;
the negative electrode for the lithium secondary battery of any one of claims 1 to 7;
a separator provided between the positive electrode and the negative electrode; and
an electrolyte.

## Patentansprüche

1. Negative Elektrode für eine Lithium-Sekundärbatterie, umfassend:
eine Negativelektroden-Stromabnehmerschicht; und
eine Negativelektroden-Aktivmaterialschicht, die auf einer Oberfläche oder beiden Oberflächen der Negativelektroden-Stromabnehmerschicht gebildet ist,
worin die Negativelektroden-Stromabnehmerschicht einen beschichteten Negativelektroden-Bereich, auf dem die Negativelektroden-Aktivmaterialschicht vorgesehen ist, und einen unbeschichteten Negativelektroden-Bereich, auf dem die Negativelektroden-Aktivmaterialschicht nicht vorgesehen ist, umfasst,
worin die Negativelektroden-Aktivmaterialschicht eine Negativelektroden-Aktivmaterialschichtzusammensetzung umfasst, die aus einer Negativelektroden-Aufschlämmung hergestellt ist,
worin die Negativelektroden-Aktivmaterialschichtzusammensetzung ein Aktivmaterial auf Siliciumbasis, ein leitfähiges Negativelektrodenmaterial und ein Negativelektroden-Bindemittel umfasst, und
worin die negative Elektrode für die Lithium-Sekundärbatterie die nachstehende Gleichung 1 erfüllt: $10 \leq \left(A1\times A2\right) / \left(B1\times B2/100\right)$
worin in Gleichung 1 A1 die Länge (mm) des ungeschichteten Negativelektroden-Bereichs ist, A2 die Dicke (µm) der Negativelektroden-Stromabnehmerschicht ist,
B1 die gewichtsbezogene Beladungsmenge (mg/25 cm²) der Negativelektroden-Aufschlämmung ist und B2 die Gewichtsteile des Negativelektroden-Bindemittels bezeichnet, bezogen auf 100 Gewichtsteile der Negativelektroden-Aktivmaterialschichtzusammensetzung;
**dadurch gekennzeichnet, dass** das Aktivmaterial auf Siliciumbasis Si in einer Menge von 90 Gewichtsteilen oder mehr umfasst, bezogen auf 100 Gewichtsteile des Aktivmaterials auf Siliciumbasis.

2. Negative Elektrode für die Lithium-Sekundärbatterie gemäß Anspruch 1, worin das Aktivmaterial auf Siliciumbasis in einer Menge von 60 Gewichtsteilen oder mehr umfasst ist, bezogen auf 100 Gewichtsteile der Negativelektroden-Aktivmaterialschichtzusammensetzung.

3. Negative Elektrode für die Lithium-Sekundärbatterie gemäß Anspruch 1, worin das leitfähige Negativelektroden-Material in einer Menge von 5 Gewichtsteilen oder mehr und 40 Gewichtsteilen oder weniger umfasst ist, bezogen auf 100 Gewichtsteile der Negativelektroden-Aktivmaterialschichtzusammensetzung.

4. Negative Elektrode für die Lithium-Sekundärbatterie gemäß Anspruch 1, worin das leitfähige Negativelektroden-Material ein planares leitfähige Material und ein lineares leitfähiges Material umfasst.

5. Negative Elektrode für die Lithium-Sekundärbatterie gemäß Anspruch 1, worin das Negativelektroden-Bindemittel ein Bindemittel auf Wasserbasis umfasst und worin das Negativelektroden-Bindemittel in einer Menge von 5 Gewichtsteilen oder und 15 Gewichtsteilen oder weniger umfasst ist, bezogen auf 100 Gewichtsteile der Negativelektroden-Aktivmaterialschichtzusammensetzung.

6. Negative Elektrode für die Lithium-Sekundärbatterie gemäß Anspruch 1, worin die Dicke (A2) der Negativelektroden-Stromabnehmerschicht 1 µm oder größer und 100 µm oder kleiner ist und
worin die Länge (A1) des unbeschichteten Negativelektroden-Bereichs 1 mm oder größer und 50 mm oder kleiner ist.

7. Negative Elektrode für die Lithium-Sekundärbatterie gemäß Anspruch 1, worin die gewichtsbezogene Beladungsmenge (B1) der Negativelektroden-Aufschlämmung 80 mg/25 cm² oder mehr und 160 mg/25 cm² oder weniger beträgt.

8. Lithium-Sekundärbatterie, umfassend:
eine positive Elektrode;
die negative Elektrode für die Lithium-Sekundärbatterie gemäß irgendeinem der Ansprüche 1 bis 7;
einen zwischen der positiven Elektrode und der negativen Elektrode vorgesehenen Separator; und
einen Elektrolyten.

## Revendications

1. Électrode négative pour une batterie secondaire au lithium, comprenant :
une couche de collecteur de courant d'électrode négative ; et
une couche de matériau actif d'électrode négative formée sur une surface ou les deux surfaces de la couche collectrice de courant d'électrode négative,
dans laquelle la couche collectrice de courant d'électrode négative comprend une zone revêtue d'électrode négative sur laquelle la couche de matériau actif d'électrode négative est présente et une zone non revêtue d'électrode négative sur laquelle la couche de matériau actif d'électrode négative est absente,
dans laquelle la couche de matériau actif d'électrode négative comprend une composition de la couche de matériau actif d'électrode négative, qui est préparée à partir d'une bouillie d'électrode négative,
dans laquelle la composition de la couche de matériau actif d'électrode négative comprend un matériau actif à base de silicium, un matériau conducteur d'électrode négative, et un liant d'électrode négative, et
dans laquelle l'électrode négative pour la batterie secondaire au lithium satisfait à l'équation 1 ci-dessous : $10 \leq \left(A1\times A2\right) / \left(B1\times B2/100\right)$
dans l'Équation 1, A1 est une longueur (mm) de la zone non revêtue d'électrode négative, A2 est une épaisseur (µm) de la couche collectrice de courant d'électrode négative,
B1 est une quantité déposée en poids (mg/25 cm²) de la bouillie d'électrode négative, et B2 signifie des parties en poids du liant d'électrode négative par rapport à 100 parties en poids de la composition de la couche de matériau actif d'électrode négative ;
**caractérisée en ce que** le matériau actif à base de silicium comprend du Si en une quantité de 90 parties en poids ou plus par rapport à 100 parties en poids de matériau actif à base de silicium.

2. Électrode négative pour la batterie secondaire au lithium selon la revendication 1, dans laquelle le matériau actif à base de silicium est inclus en une quantité de 60 parties en poids ou plus par rapport à 100 parties en poids de la composition de la couche de matériau actif d'électrode négative.

3. Électrode négative pour la batterie secondaire au lithium selon la revendication 1, dans laquelle le matériau conducteur d'électrode négative est inclus en une quantité de 5 parties en poids ou plus et de 40 parties en poids ou moins par rapport à 100 parties en poids de la composition de la couche de matériau actif d'électrode négative.

4. Électrode négative pour la batterie secondaire au lithium selon la revendication 1, dans laquelle le matériau conducteur de l'électrode négative comprend un matériau conducteur plan et un matériau conducteur linéaire.

5. Électrode négative pour la batterie secondaire au lithium selon la revendication 1, dans laquelle le liant d'électrode négative comprend un liant aqueux, et
dans laquelle le liant d'électrode négative est inclus en une quantité de 5 parties en poids ou plus et de 15 parties en poids ou moins par rapport à 100 parties en poids de la composition de la couche de matériau actif d'électrode négative.

6. Électrode négative pour la batterie secondaire au lithium selon la revendication 1, dans laquelle l'épaisseur (A2) de la couche collectrice de courant d'électrode négative est de 1 µm ou plus et de 100 µm ou moins, et
dans laquelle la longueur (A1) de la zone non revêtue d'électrode négative est de 1 mm ou plus et de 50 mm ou moins.

7. Électrode négative pour la batterie secondaire au lithium selon la revendication 1, dans laquelle la quantité déposée en poids (B1) de la bouillie d'électrode négative est de 80 mg/25 cm² ou plus et de 160 mg/25 cm² ou moins.

8. Batterie secondaire au lithium comprenant :
une électrode positive ;
l'électrode négative pour la batterie secondaire au lithium selon l'une quelconque des revendications 1 à 7 ;
un séparateur disposé entre l'électrode positive et l'électrode négative ; et un électrolyte.
